Europäisches Patentamt

European Patent Office

Office européen des brevets

(19)

(11) Veröffentlichungsnummer: **0 206 029**
**B1**

(12) **EUROPÄISCHE PATENTSCHRIFT**

(45) Veröffentlichungstag der Patentschrift:
11.10.89

(21) Anmeldenummer: 86107638.8

(22) Anmeldetag: 05.06.86

(51) Int. Cl.⁴: **F 16 C 32/06**

(54) Gasstatische Lagerung.

(30) Priorität: 10.06.85 DE 3520717
26.08.85 DE 3530437

(43) Veröffentlichungstag der Anmeldung:
30.12.86 Patentblatt 86/52

(45) Bekanntmachung des Hinweises auf die Patenterteilung: 11.10.89 Patentblatt 89/41

(84) Benannte Vertragsstaaten:
AT BE CH DE FR GB IT LI LU NL SE

(56) Entgegenhaltungen:
FR–A– 1 524 941
GB–A– 724 603
GB–A– 1 118 366
US–A– 3 657 782

(73) Patentinhaber: INTERATOM Gesellschaft mit beschränkter Haftung
Friedrich-Ebert-Strasse
D-5060 Bergisch-Gladbach 1 (DE)

(72) Erfinder: Tittizer, Gabriel, Dipl.-Ing.
Auf dem Rosenberg 19b
D-5064 Rösrath-Hoffnungstal (DE)

(74) Vertreter: Mehl, Ernst, Dipl.-Ing. et al
Postfach 22 13 17
D-8000 München 22 (DE)

Jouve, 18, rue St-Denis, 75001 Paris, France

## Beschreibung

Die vorliegende Erfindung betrifft ein gasstatisches Lager nach dem Oberbegriff des Anspruchs 1. Aus der DE-A-3230 232 ist der prinzipielle Aufbau eines solchen Lagers bekannt. In dieser Schrift wird auf die schwingungsdämmende Wirkung einer dichteren Oberflächenschicht hingewiesen. Aus der US-A-3 171 295 ist auch schon eine gasstatische Lagerung einer Spindel bekannt, bei der das Gas durch das Innere einer porösen Spindel nach außen strömt und eine gasstatische Lagerung innerhalb einer Mutter bewirkt. Schwingungsprobleme sind in dieser Schrift allerdings nicht behandelt und auch die Lagerung von glatten, eventuell schnell rotierenden Wellen wird nicht behandelt. Sowohl in radialer als auch in axialer Richtung wirkende Gaslager sind z. B. aus der US-A-3 657 782 bekannt, wobei es sich hier allerdings um von der Gasversorgung her getrennte, lediglich in unmittelbarer Nachbarschaft zueinander angeordnete Lager von einfacher zylindrischer Geometrie ohne Knickstellen usw. handelt. Diese Schrift zeigt auch die Anordnung von besonderen Kanälen zur Abfuhr des verbrauchten Lagergases. Da es sich ohnehin um voneinander getrennte Lager handelt, tragen die Auslaßkanäle hier nichts zur Entkoppelung von Radial- und Axiallager bei.

Aufgabe der vorliegenden Erfindung ist ein gasstatisches Lager, welches besonders gute Lagereigenschaften aufweist und sich für besondere Lagerungsprobleme eignet, insbesondere die Lagerung von sehr schnell rotierenden Wellen. Weiterhin soll der prinzipielle Aufbau des einen Lagers sowohl eine radiale wie eine axiale Führung einer Welle ermöglichen.

Zur Lösung dieser Aufgabe wird eine gasstatisches Lager nach dem Hauptanspruch vorgeschlagen. Dieses Lager weist nicht nur an den Enden der Lagerspalte Gasauslässe auf, sondern hat auch im Inneren des Lagers Gasauslaßwege, die mit dem Lagerspalt in Verbindung stehen. Analytische Betrachtungen haben gezeigt, daß die dynamischen Eigenschaften eines Lagers ganz wesentlich von den Gasauslaßwegen abhängen. Es genügt daher für viele Anwendungen nicht, lediglich an den Enden von eventuell sehr langen Lagerspalten Gasauslaßwege vorzusehen. Insbesondere bei komplizierteren Geometrien der Lagerspalte, welche bei einer axialen und radialen Lagerung einer Welle auftreten, wird der Gasfluß im Lagerspalt an den Knickstellen deutlich behindert, was durch zusätzliche Gasauslaßwege ausgeglichen werden kann.

Weiterhin wird im Anspruch vorgeschlagen, daß die Führungsflächen des gasstatischen Lagers so ausgebildet sind, daß die Welle in radialer und axialer Richtung gelagert ist. Diese Ausführungsform, die unter Umständen auch ohne die übrigen Merkmale des Anspruchs möglich ist, läßt sich in funktionsfähiger Form erst seit der Erkenntnis verwirklichen, daß die Gasaustrittsflächen den weitaus größten Teil des Druckabfalls im Lager übernehmen müssen. Durch diese Ausgestaltung kommt es auf die Länge der Wege, die das Gas innerhalb der porösen Bauteile zurücklegen muß für den Druck an den Gasaustrittsflächen nicht mehr an. Es herrscht vielmehr an allen Gasaustrittsflächen unabhängig von deren Form etwa der gleiche Druck. Erst dadurch ist es möglich, komplizierter gestaltete Lagergeometrien zu verwirklichen, bei denen sowohl radiale wie axiale Führungskräfte auf eine geeignet geformte Welle ausgeübt werden können.

Die bisherigen und folgenden Ausführungen beziehen sich jeweils sowohl auf die Möglichkeit, daß die Gaszufuhr von außen durch die Lagerschale in den Lagerspalt erfolgt, als auch darauf, daß die Gaszufuhr durch eine hohle und/oder poröse Welle von innen in den Lagerspalt erfolgt. Außerdem gelten die Betrachtungen immer sinngemäß für eine stehende Welle mit rotierendem Lager.

Gemäß Anspruch 2 ist es besonders günstig, die axialen Führungskräfte durch geeignet geformte Stege der Welle bzw. der Lagerschale mit entsprechenden Gasaustrittsflächen zu verwirklichen.

Die Tatsache, daß an den Gasaustrittsflächen unabhängig von ihrer genauen Form überall nahezu der gleiche Druck ansteht, ermöglicht es, wie im 3. Anspruch vorgeschlagen, die der radialen Führung dienenden Führungsflächen und die der axialen Führung dienenden Führungsflächen mit unterschiedlichen Porositäten auszustatten, je nach den gewünschten axialen bzw. radialen Führungskräften und den entsprechenden Flächenverhältnissen der Führungsflächen. Auch diese Ausführung war bei herkömmlichen gasstatischen Lagern ohne dichtere Gasaustrittsschicht nicht problemlos möglich. Bei homogenen porösen Materialien ist der Druck an einzelnen Stellen der Gasaustrittsflächen umgekehrt proportional dem zurückgelegten Weg des Gases in dem porösen Körper. Dies trifft für die erfindungsgemäße Ausführung nicht mehr zu, so daß eine sehr große Flexibilität in bezug auf Form und Eigenschaften der Lager besteht.

In den folgenden Ansprüchen werden weitere vorteilhafte Ausgestaltungen der Erfindung beschrieben. Diese betreffen insbesondere die Anordnung der Gasauslaßwege in der Lagerschale oder der gelagerten Welle, wie sie anhand der Zeichnung noch näher erläutert werden. Für die dynamischen Eigenschaften des Lagers ist es wichtig, daß die der radialen Lagerung dienenden Lagerspalte eigene Gasauslaßwege besitzen, ohne daß das Gas zunächst über längere Strecken und um Knickstellen strömen muß. In axialer Richtung verlaufende Gasauslaßnuten, die zum Lagerspalt hin offen sind, verringern die Neigung zum Schwingen und Taumeln der Welle, insbesondere wenn sie in ungleichmäßigen Abständen über den Umfang verteilt sind. Außerdem werden durch axiale Nuten besonders einfache Gasauslaßwege für in Umfangsrichtung verlaufende Gasauslaßnuten geschaffen.

Ansonsten besteht sowohl für die Anordnung der Gasauslaßwege wie auch für die Anordnung der axialen und radialen Führungsflächen eine große Freiheit bei der Gestaltung des Lagers, die jeweils die Gegebenheiten berücksichtigen kann. Insbesondere können die radialen Führungsflächen unterschiedliche Durchmesser aufweisen, was die Schwingungsneigung des Lagers vermindert. Dabei können die Führungsflächen gemäß dem im Anspruch 7 gemachten Vorschlag auch so gestaltet sein, daß ihre Führungskräfte Komponenten in radialer und/oder axialer Richtung haben. Beispielsweise können im Längsschnitt V-förmige Führungsflächen gebildet werden, so daß Lager bzw. Welle etwa die Form von Doppelkegeln haben.

In spezieller Ausgestaltung der Erfindung wird im Anspruch 10 noch vorgeschlagen, daß das Lager aus zwei oder mehreren Teilen besteht, welche formschlüssig durch Nut und Feder oder dergleichen ineinandersetzbar sind. Bei der Montage von Lagern mit axialen Führungsflächen kann es nötig sein, Lager aus mehreren Teilen zu verwenden, die nacheinander eingesetzt oder auf eine Welle geschoben werden. Die Aufteilung eines Lagers in verschiedene Bereiche kann nach konstruktiven Gesichtspunkten erfolgen. Sofern die Teile mit genügend kleiner Toleranz gefertigt werden, verschlechtern sich die Lagereigenschaften dadurch nicht.

In Anspruch 11 wird speziell vorgeschlagen, daß die Trennflächen von aus mehreren Teilen bestehenden Lagern, ggf. unter Einbeziehung von geeignet angebrachten Hohlräumen, einen ungehinderten Gasaustausch zwischen den einzelnen Teilen des Lagers ermöglichen sollen. Auf diese Weise ist es sogar möglich, die Gaseinspeisung nur in einem kleinen Außenbereich eines Teilstückes des Lagers vorzunehmen, ohne daß dies die Druckverhältnisse im Inneren des Lagers stört. Das Gas gelangt durch die Trennflächen bzw. Hohlräume von einem Teil des Lagers in das andere, so daß wiederum an den erheblich dichteren Gasaustrittsflächen überall etwa der gleiche Druck ansteht.

Ausführungsbeispiele der Erfindung in schematischer Form werden anhand der Zeichnung näher erläutert. In den Figuren 1, 2, 3 und 4 sind jeweils halbe Längsaxialschnitte von unterschiedlich ausgeführten gasstatischen Lagern in schematischer Form dargestellt. Bei Fig. 1, 2 und 4 handelt es sich um Lager mit von außen nach innen strömendem Gas, bei Fig. 3 um ein Lager mit durch die Welle nach außen strömendem Gas. In Fig. 5 ist schematisch ein Querschnitt durch den Innenteil eines Lagers mit axialen Gasauslaßnuten dargestellt.

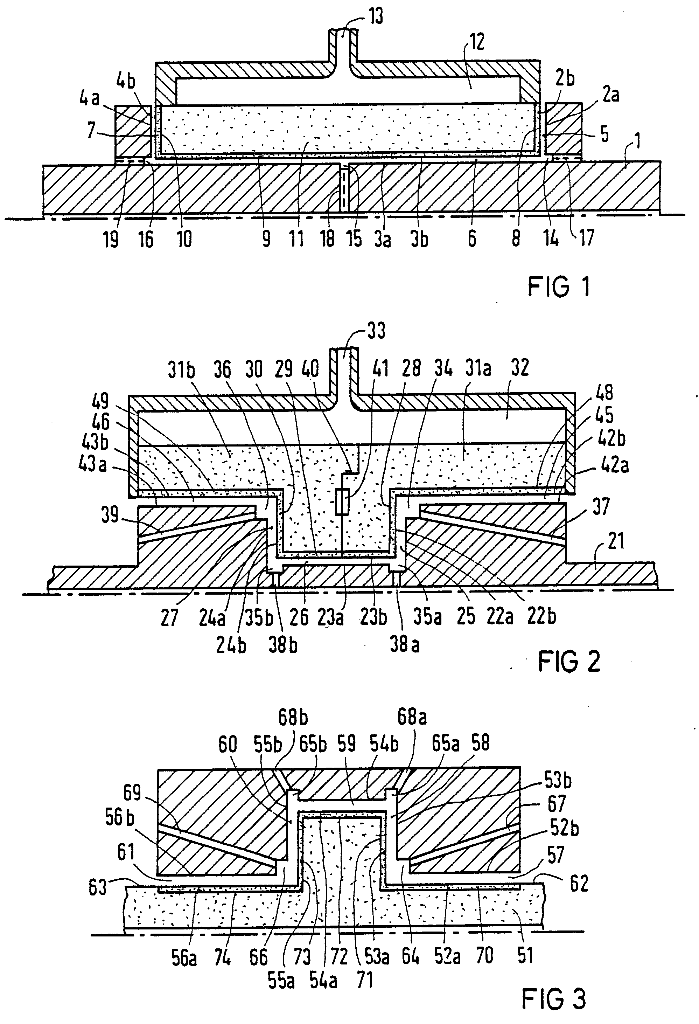

In Figur 1 ist eine Welle 1 in einer umgebenden Lagerschale 11 gelagert. Durch einen Einlaß 13 strömt Gas in einen Gaszuführraum 12 und von dort durch die poröse Lagerschale 11 zu den Gasaustrittsflächen 2b, 3b, 4b. Diese Gasaustrittsflächen 2b, 3b, 4b bzw. die angrenzenden Oberflächenschichten 8, 9, 10 sind erheblich dichter als die übrige Lagerschale 11, so daß in diesen Oberflächenschichten 8, 9, 10 der eigentliche Druckabfall stattfindet. Den jeweiligen Führungsflächen 2b, 3b, 4b der Lagerschale 11, liegen komplementäre Führungsflächen 2a, 3a, 4a der Welle 1 gegenüber. Zwischen diesen Flächen befinden sich die Lagerspalte 5, 6, 7. Die Führungsflächen 3a, 3b dienen der radialen Führung des Lagers, wie an sich nach dem Stand der Technik bekannt, während die Führungsflächen 2a, 2b bzw. 4a, 4b die axiale Lagerung der Welle 1 bilden, was ohne die dichteren Oberflächenschichten 8, 9, 10 zu einer Verschlechterung der radialen Lagereigenschaften führen müßte. Auch bei Vorhandensein der dichteren Oberflächenschichten 8, 9, 10 kann die kompliziertere Form der Lagerspalte 5, 6, 7 die dynamischen Eigenschaften des Lagers verschlechtern, da Gas nicht mehr ungehindert aus dem zur radialen Lagerung dienenden Spalt 6 abfließen kann. Um dem abzuhelfen, sieht das erfindungsgemäße Lager Gasauslaßwege 14, 15, 16, 17, 18, 19 vor, durch welche das Gas aus den Lagerspalten 5, 6, 7 zusätzlich abfließen kann. Die Gasauslaßwege haben die Form von ringförmigen Nuten 14, 15, 16 und stehen durch Bohrungen 17, 18, 19 mit der Umgebung oder einem Gassammelraum in Verbindung. Ist der der radialen Lagerung dienende Lagerspalte 6 nicht besonders lang, insbesondere kleiner als der Durchmesser der Welle 1, so kann in dessen Bereich auf einen zusätzlichen Gasauslaßweg 15, 18 verzichtet werden. Der hier gezeichnete Wege ist ohnehin nur möglich, wenn die Welle 1 hohl ist. Ansonsten können die zusätzlichen Gasauslaßwege natürlich mit geeigneten Mitteln auch durch die Lagerschale 11 zurück nach außen geführt werden. Das in Figur 1 dargestellte Lager weist der axialen Führung dienende Führungsflächen 2a, 2b, 4a, 4b an den Enden des Lagers auf. Dies ist eine sehr einfache Ausführungsform, jedoch nicht die einzig mögliche.

In Figur 2 ist daher ein Lager dargestellt, welches axiale Führungsflächen 22a, 22b, 24a, 24b im Inneren des Lagers aufweist. Ansonsten entspricht die Funktion der meisten Teile denen der in Figur 1 beschriebenen. Gas gelangt durch einen Gaseinlaß 33 in einen Gaszuführraum 32 und durch eine poröse Lagerschale 31a, 31b zu den Gasaustrittsflächen 22b, 23b, 24b, 42b, 43b, bzw. den dahinterliegenden dichten Schichten 28, 29, 30, 48, 49. Die Lagerschale ist in diesem Beispiel zweigeteilt in die Teile 31a, 31b, welche formschlüssig 40 ineinandergesetzt sind. Durch die Trennflächen kann im allgemeinen ein ungehinderter Gasaustausch stattfinden. Sollte dies im Einzelfall durch bestimmte Bearbeitungsschritte nicht mehr möglich sein, so können besonders bearbeitete Hohlräume 41 zwischen den Lagerteilen 31a, 31b vorgesehen werden, durch welche jedenfalls ein Gasaustausch möglich ist. Im vorliegenden Beispiel kommt es auf den Gasaustausch jedoch nicht an, da beide Teile 31a, 31b der Lagerschale Verbindung mit dem Gaszuführraum 32 haben. Bei speziell geformten komplizierteren Lagern kann jedoch ein Gasaustausch an den Trennflächen verschiedener Lagerteile nötig sein.

Den Gasaustrittsflächen 22b, 23b, 24b, 42b, 43b liegen komplementäre Führungsflächen 22a, 23a, 24a, 42a, 43a gegenüber, wobei zwischen den Führungsflächen Lagerspalte 25, 26, 27, 45, 46 vorhanden sind. Zusätzliche Gasauslaßwege in Form von ringförmigen Nuten 34, 35a, 35b, 36 in Verbindung mit entsprechenden Bohrungen 37, 38a, 38b, 39 verkürzen die Gasauslaßwege und verbessern dadurch die dynamischen Eigenschaften des Lagers.

Ein weiteres Ausführungsbeispiel der Erfindung ist in Figur 3 dargestellt, wobei es sich hier um ein Lager mit Gaszufuhr durch das Innere der Welle 51 handelt. Eine zumindest im Lagerbereich poröse Welle 51 wird von Innen über eine nicht dargestellte Vorrichtung mit Gas unter Druck beaufschlagt. Dieses Gas gelangt wie bei den bisher beschriebenen Lagerschalen zu den Gasaustrittsflächen 52a, 53a, 54a, 55a, 56a bzw. zu den dahinterliegenden dichteren Schichten 70, 71, 72, 73, 74. Den Gasaustrittsflächen 52a, 53a, 54a, 55a, 56a liegen komplementäre Führungsflächen 52b, 53b, 54b, 55b, 56b gegenüber. Durch die dazwischenliegenden Lagerspalte 57, 58, 59, 60, 61 kann das austretende Gas entweichen. Zusätzliche Gasauslaßwege in Form von Ringnuten 64, 65a, 65b, 66 mit entsprechenden Gasauslaßbohrungen 67, 68a, 68b, 69 verbessern die dynamischen Eigenschaften des Lagers.

Bei diesen drei Ausführungsbeispielen ist es möglich, die radialen Führungsflächen mit einer anderen Porösität auszustatten als die axialen Führungsflächen. Sofern mehrere verschiedene Flächen für eine der beiden Führungsarten zur Verfügung stehen, können auch diese untereinander unterschiedlich porös ausgelegt sein. So ist es beispielsweise auch möglich, die Gasaustrittsfläche 23b in Figur 2 völlig abzudichten, so daß der Lagerspalt 26 nicht zur radialen Lagerung beiträgt. Solche Maßnahmen richten sich nach den jeweiligen Anforderungen an die Eigenschaften des Lagers und nach den räumlichen Gegebenheiten.

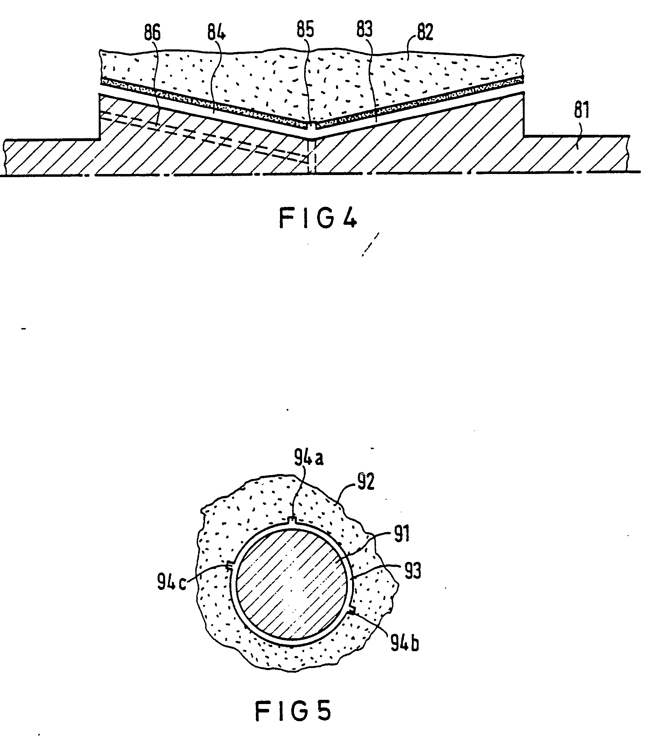

Fig. 4 zeigt schematisch den inneren Teil eines erfindungsgemäßen Lagers als halben Längsaxialschnitt. Die Lagerspalte 83, 84 stehen V-förmig zueinander und bewirken so zusammen eine radiale und axiale Lagerung, wobei die Verteilung der Führungskräfte auf die axiale und radiale Lagerung vom Winkel zwischen den Lagerspalten 83, 84 abhängt. An der Knickstelle zwischen den Lagerspalten 83, 84 ist ein Gasauslaßweg in Form einer Umfangsnut 85 und Auslaßbohrungen 86 vorgesehen. Die Welle 81 weist im Bereich des Lagers die Form von zwei an den Oberseiten aneinanderstoßenden Kegelstümpfen auf.

Fig. 5 zeigt die Anordnung von axialen Gasauslaßnuten 94a, 94b, 94c in der Lagerschale 92 anhand eines Querschnittes durch ein erfindungsgemäßes Lager. Beim Rotieren der Welle 93 können so störende mitumlaufende Gaspolster abgebaut werden. Zur Vermeidung von Schwingungen ist es vorteilhaft, die axialen Nuten 94a, 94b, 94c in ungleichmäßigen Abständen auf dem Umfang anzuordnen.

Erfindungsgemäße gasstatische Lager eignen sich besonders für den Einsatz bei schnell rotierenden Wellen, wie z. B. in Turbinen oder dergleichen.

**Patentansprüche**

1. Gasstatisches Lager mit einer Welle (1 ; 21 ; 51 ; 81 ; 91), wobei Lager und Welle (1 ; 21 ; 51 ; 81 ; 91) komplementäre, durch Lagerspalte (5, 6, 7 ; 25, 26, 27, 45, 46 ; 57, 58, 59, 60, 61 ; 83, 84 ; 93) getrennte Führungsflächen (2a, 2b, 3a, 3b, 4a, 4b ; 22a, 22b, 23a, 23b, 24a, 24b, 42a, 42b, 43a, 43b ; 52a, 52b, 53a, 53b, 54a, 54b, 55a, 55b, 56a, 56b) aufweisen, wobei ferner mindestens je eine der Führungsflächen (2b, 3b, 4b ; 22b, 23b, 24b, 42b, 43b ; 52a, 53a, 54a, 55a, 56a) als poröse Gasdurchtrittsfläche ausgebildet ist, der Gas unter Druck durch die dahinterliegenden Bauteile zuführbar ist, und wobei jeweils die Gasdurchtrittsflächen bzw. eine an die Gasdurchtrittsflächen angrenzende dünne poröse Schicht (8, 9, 10 ; 28, 29, 30, 48, 49 ; 70, 71, 72, 73, 74) erheblich dichter als die übrigen porösen gasdurchlässigen Bereiche (11 ; 31a, 31b ; 51) des hinter den Gasdurchtrittsflächen liegenden Materials ist, so daß der Druckabfall in diesen Schichten (8, 9, 10 ; 28, 29, 30, 48, 49 ; 70, 71, 72, 73, 74) wesentlich größer ist als in den gesamten übrigen Bereichen (11 ; 31a, 31b ; 51), dadurch gekennzeichnet, daß die Lagerspalte (5, 6, 7 ; 25, 26, 27, 45, 46 ; 57, 58, 59, 60, 61 ; 83, 84 ; 93) nicht nur an ihren Enden Gasauslässe aufweisen, sondern auch mit zusätzlichen Gasauslaßwegen (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) im Inneren des Lagers in Verbindung stehen, daß die Führungsflächen (2a, 2b, 3a, 3b, 4a, 4b ; 22a, 22b, 23a, 23b, 24a, 24b, 42a, 42b, 43a, 43b ; 52a, 52b, 53a, 53b, 54a, 54b, 55a, 55b, 56a, 56b) so ausgebildet sind, daß die Welle in radialer und axialer Richtung gelagert ist, und daß die zusätzlichen Gasauslaßwege (14, 15, 16, 17, 18, 19 ; 34, 35a, 35b, 36, 37, 38a, 38b, 39 ; 64, 65a, 65b, 66, 67, 68a, 68b, 69) im Bereich von Knickstellen der Lagerspalte (5, 6, 7 ; 25, 26, 27, 45, 46 ; 57, 58, 59, 60, 61 ; 83, 84) und ggf. im Verlauf von besonders langen geraden Abschnitten (6) der Lagerspalte (5, 6, 7 ; 25, 26, 27, 45, 46 ; 57, 58, 59, 60, 61 ; 83, 84) beginnen.

2. Gasstatisches Lager nach Anspruch 1, dadurch gekennzeichnet, daß die der axialen Führung dienenden Führungsflächen (2a, 2b, 4a, 4b ; 22a, 22b, 24a, 24b ; 53a, 53b, 55a, 55b) in Form von Stegen der Welle (1 ; 51) bzw. der Lagerschale (31a, 31b) ausgebildet sind.

3. Gasstatisches Lager nach Anspruch 1 oder 2, dadurch gekennzeichnet, daß die der radialen Führung dienenden Führungsflächen (3b ; 23b, 42b, 43b ; 52a, 54a, 56a) bzw. die dahinterliegenden dünnen Schichten (9 ; 29, 48, 49 ; 70, 72, 74) und die der axialen Führung dienenden Führungsflächen (2b, 4b ; 22b, 24b ; 53a, 55a) bzw.

die dahinterliegenden dünnen Schichten (8, 10 ; 28, 30 ; 71, 73) unterschiedliche Porositäten aufweisen, je nach den gewünschten axialen bzw. radialen Führungskräften und den entsprechenden Flächenverhältnissen der Führungsflächen.

4. Gasstatisches Lager nach Anspruch 1, 2 oder 3, dadurch gekennzeichnet, daß die zusätzlichen Gasauslaßwege (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) in der Lagerschale und/oder in der gelagerten Welle (1 ; 21 ; 51 ; 81 ; 91) angeordnet sind.

5. Gasstatisches Lager nach einem der vorhergehenden Ansprüche, dadurch gekennzeichnet, daß die zusätzlichen Gasauslaßwege (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) aus in Umfangsrichtung und/oder in axialer Richtung verlaufenden Nuten (14, 15, 16 ; 34, 35a, 35b, 36 ; 64, 65a, 65b, 66 ; 85 ; 94a, 94b, 94c) bestehen, welche durch Bohrungen (17, 18, 19 ; 37, 38a, 38b, 39 ; 67, 68a, 68b, 69 ; 86) oder dergleichen mit der Umgebung oder einem Gassammelraum in Verbindung stehen.

6. Gasstatisches Lager nach einem der vorhergehenden Ansprüche, dadurch gekennzeichnet, daß die der axialen Führung dienenden Führungsflächen (2a, 2b, 4a, 4b bzw. 22a, 22b, 24a, 24b ; 53a, 53b, 55a, 55b) an den Enden des Lagers bzw. in dessen Innerem angeordnet sind.

7. Gasstatisches Lager nach Anspruch 1, 4 oder 5, dadurch gekennzeichnet, daß die Lagerspalte (83, 84) im Längsschnitt V-förmig gestaltet sind, so daß Lagerschale (82) bzw. Welle (81) etwa die Form von Doppelkegeln haben.

8. Gasstatisches Lager nach Anspruch 5, dadurch gekennzeichnet, daß zwei, drei oder mehr axiale Längsnuten (94a, 94b, 94c) als zusätzliche Gasauslaßwege vorhanden sind.

9. Gasstatisches Lager nach Anspruch 8, dadurch gekennzeichnet, daß die axialen Längsnuten (94a, 94b, 94c) mit jeweils untereinander unterschiedlichen Abständen über den Lagerumfang verteilt sind.

10. Gasstatisches Lager nach einem der vorhergehenden Ansprüche, dadurch gekennzeichnet, daß das Lager aus zwei oder mehreren rotationssymmetrischen Teilen (31a, 31b) besteht, welche formschlüssig (40) durch Nut und Feder oder dergleichen ineinandersetzbar sind.

11. Gasstatisches Lager nach Anspruch 10, dadurch gekennzeichnet, daß die Porosität der Trennflächen (40), ggf. unter Einbeziehung von Hohlräumen (41), einen ungehinderten Gasaustausch zwischen den einzelnen Teilen (31a, 31b) des Lagers ermöglicht.

## Claims

1. An aerostatic bearing with a shaft (1 ; 21 ; 51 ; 81 ; 91), the bearing and shaft (1 ; 21 ; 51 ; 81 ; 91) comprising complementary guide surfaces (2a, 2b, 3a, 3b, 4a, 4b ; 22a, 22b, 23a, 23b, 24a, 24b, 42a, 42b, 43a, 43b ; 52a, 42b, 53a, 53b, 54a, 54b, 55a, 55b, 56a, 56b) which are divided by bearing gaps (5, 6, 7 ; 25, 26, 27, 45, 46 ; 57, 58, 59, 60, 61 ; 83, 84 ; 93), at least one of the guide surfaces (2b, 3b, 4b ; 22b, 23b, 24b, 42b, 43b ; 52a, 53a, 54a, 55a, 56a) in each case being designed as a porous gas permeation surface, the gas being supplied under pressure through the underlying structural parts, and the gas permeation surfaces or a thin porous layer (8, 9, 10 ; 28, 29, 30, 48, 49 ; 70, 71, 72, 73, 74) adjoining the gas permeation surfaces being considerably denser than the other porous gas permeable areas (11 ; 31a, 31b ; 51) of the material lying behind the gas permeation surfaces, so that the pressure drop in these layers (8, 9, 10 ; 28, 29, 30, 48, 49 ; 70, 71, 72, 73, 74) is considerably greater than in all the other areas (11 ; 31a, 31b ; 51), characterised in that the bearing gaps (5, 6, 7 ; 25, 26, 27, 45, 46 ; 57, 58, 59, 60, 61 ; 83, 84 ; 93) not only comprise gas outlets at their ends, but are also connected with additional gas outlet paths (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) inside the bearing, in that the guide surfaces (2a, 2b, 3a, 3b, 4a, 4b ; 22a, 22b, 23a, 23b, 24a, 24b, 42a, 42b, 43a, 43b ; 52a, 52b, 53a, 53b, 54a, 54b, 55a, 55b, 56a, 56b) are designed in such a manner that the shaft is mounted in radial and axial directions, and in that the additional gas outlet paths (14, 15, 16, 17, 18, 19 ; 34, 35a, 35b, 36, 37, 38a, 38b, 39 ; 64, 65a, 65b, 66, 67, 68a, 68b, 69) begin in the region of bends in the bearing gaps (5, 6, 7 ; 25, 26, 27, 45, 46 ; 57, 58, 59, 60, 61 ; 83, 84) and optionally in the course of particularly long straight sections (6) of the bearing gaps (5, 6, 7 ; 25, 26, 27, 45, 46 ; 57, 58, 59, 60, 61 ; 83, 84).

2. An aerostatic bearing according to claim 1, characterised in that the guide surfaces (2a, 2b, 4a, 4b ; 22a, 22b, 24a, 24b ; 53a, 53b, 55a, 55b) used for the axial guidance are designed in the form of webs of the shaft (1 ; 51) or of the bearing shell (31a, 31b).

3. An aerostatic bearing according to claim 1 or 2, characterised in that the guide surfaces (3b ; 23b, 42b, 43b ; 52a, 54a, 56a) used for the radial guidance and the underlying thin layers (9 ; 29, 48, 49 ; 70, 72, 74) and the guide surfaces (2b, 4b ; 22b, 24b ; 53a, 55a) used for the axial guidance and the underlying thin layers (8, 10 ; 28, 30 ; 71, 73) have different porosities, depending on the desired axial or radial guide forces and the corresponding surface ratios of the guide surfaces.

4. An aerostatic bearing according to claim 1, 2 or 3, characterised in that the additional gas outlet paths (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) are disposed in the bearing shell and/or in the mounted shaft (1 ; 21 ; 51 ; 81 ; 91).

5. An aerostatic bearing according to any one of the preceding claims, characterised in that the additional gas outlet paths (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) are formed by grooves (14, 15, 16 ; 34, 35a, 35b, 36 ; 64, 65a, 65b, 66 ; 85 ; 94a, 94b, 94c) extending in a circumferential direction and/or in an axial direction, which are connected by bores (17, 18, 19 ; 37, 38a, 38b, 39 ; 67, 68a, 68b, 69 ; 86) or the like with the external atmosphere or a gas collecting chamber.

6. An aerostatic bearing according to any one of the preceding claims, characterised in that the guide surfaces (2a, 2b, 4a, 4b and 22a, 22b, 24a, 24b ; 53a, 53b, 55a, 55b) used for the axial guidance are arranged at the ends of the bearing or inside the bearing.

7. An aerostatic bearing according to claim 1, 4 or 5, characterised in that the bearing gaps (83, 84) are designed so as to be V-shaped in longitudinal section, so that the bearing shell (82) or shaft (81) have approximately the shape of double cones.

8. An aerostatic bearing according to claim 5, characterised in that two, three or more axial longitudinal grooves (94a, 94b, 94c) are provided as additional gas outlet paths.

9. An aerostatic bearing according to claim 8, characterised in that the axial longitudinal grooves (94a, 94b, 94c) are distributed over the circumference of bearing at irregular intervals in each case.

10. An aerostatic bearing according to any one of the preceding claims, characterised in that the bearing is formed from two or more rotationally symmetrical parts (31a, 31b), which can be interconnected in a form-locking manner (40) by a groove and tongue joint or the like.

11. An aerostatic bearing according to claim 10, characterised in that the porosity of the dividing surfaces (40), possibly including cavities (41), allows for an unimpeded gas exchange between the individual parts (31a, 31b) of the bearing.

## Revendications

1. Palier aérostatique comportant un arbre (1 ; 21 ; 51 ; 81 ; 91), le palier et l'arbre (1 ; 21 ; 51 ; 81 ; 91) comportant des surfaces de guidage complémentaires (2a, 2b, 3a, 3b, 4a, 4b ; 22a, 22b, 23a, 23b, 24a, 24b ; 42a, 42b, 43a, 43b ; 52a, 52b, 53a, 53b, 54a, 54b, 55a, 55b, 56a, 56b), séparées par des fentes (5, 6, 7 ; 25, 26, 27, 45, 46 ; 57, 58, 59, 60, 61 ; 83, 84 ; 93), et dans lequel, en outre, respectivement au moins l'une des surfaces de guidage (2a, 3b, 4b ; 22b, 23b, 24b, 42b, 43b ; 52a, 53a, 54a, 55a, 56a) est réalisée sous la forme d'une surface poreuse de passage du gaz, à laquelle un gaz comprimé peut être envoyé à travers les composants situés en aval, et dans lequel respectivement les surfaces de passage du gaz ou une couche mince poreuse (8, 9, 10 ; 28, 29, 30, 48, 49 ; 70, 71, 72, 73, 74), qui est contiguë aux surfaces de passage du gaz, est nettement plus dense que les autres zones poreuses (11 ; 31a, 31b ; 51), perméable au gaz, du matériau situé en aval des surfaces de passage du gaz, de sorte que la chute de pression dans ces couches (8, 9, 10 ; 28, 29, 30 ; 48, 49 ; 70, 71, 72, 73, 74) est nettement plus élevée que dans les autres zones (11 ; 31a, 31b ; 51), caractérisé par le fait que non seulement les fentes (5, 6, 7 ; 25, 26, 27, 45, 46 ; 57, 58, 59, 60, 61 ; 83, 84 ; 93) du palier comportent, à leurs extrémités, des sorties pour le gaz, mais elles sont également reliées à des trajets supplémentaires de sortie du gaz (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) situés à l'intérieur du palier, et que les surfaces de guidage (2a, 2b, 3a, 3b, 4a, 4b ; 22a, 22b, 23a, 23b, 24a, 24b, 42a, 42b, 43a, 43b ; 52a, 52b, 53a, 53b, 54a, 54b, 55a, 55b, 56a, 56b) sont agencées de telle sorte que l'arbre est supporté dans les directions radiale et axiale et que les trajets supplémentaires de passage de sortie du gaz (14, 15, 16, 17, 18, 19 ; 34, 35a, 35b, 36, 37, 38a, 38b, 39 ; 64, 65a, 65b, 66, 67, 68a, 68b, 69) commencent dans la zone de coudes des fentes (5, 6, 7 ; 25, 26, 27, 45, 46 ; 57, 58, 59, 60, 61 ; 83, 84) du palier et éventuellement dans l'étendue de sections rectilignes particulièrement longues (6) des fentes (5, 6, 7 ; 25, 26, 27, 45, 46 ; 57, 58, 59, 60, 61 ; 83, 84) du palier.

2. Palier aérostatique suivant la revendication 1, caractérisé par le fait que les surfaces de guidage (2a, 5b, 4a, 4b ; 22a, 22b, 24a, 24b ; 53a, 53b, 55a, 55b), qui servent au guidage axial, sont réalisées sous la forme de barrettes de l'arbre (1 ; 51) ou de la coque du palier (31a, 31b).

3. Palier aérostatique suivant la revendication 1 ou 2, caractérisé par le fait que les surfaces de guidage (3b ; 23b, 42b, 43b ; 52a, 54a, 56a), qui servent à réaliser le guidage radial, ou les couches minces sous-jacentes (9 ; 29 ; 48, 49 ; 70, 72, 74) et les surfaces de guidage (2b, 4b ; 22b, 24b ; 53a, 55a), qui servent à réaliser le guidage axial, ou les couches minces sous-jacentes (8, 10 ; 28, 30 ; 71, 73) possèdent des porosités différentes, en fonction des forces axiales ou radiales de guidage désirées et des conditions correspondantes des surfaces de guidage.

4. Palier aérostatique suivant la revendication 1, 2 ou 3, caractérisé par le fait que les trajets supplémentaires de sortie du gaz (14, 15, 16, 17, 18, 19 ; 34, 35a, 35b, 36, 37, 38a, 38b, 39 ; 64, 65a, 65b, 66, 67, 68a, 68b, S69 ; 85, 86 ; 94a, 94b, 94c) sont situés dans la coque de palier et/ou dans l'arbre supporté (1 ; 21 ; 51 ; 81, 91).

5. Palier aérostatique suivant l'une des revendications précédentes, caractérisé par le fait que les trajets supplémentaires de sortie du gaz (14, 15, 16, 17, 18, 19 ; 34, 35a, 35b, 36, 37, 38a, 38b, 39 ; 64, 65a, 65b, 66, 67, 68a, 68b, 69 ; 85, 86 ; 94a, 94b, 94c) sont constitués par des rainures (14, 15, 16 ; 34, 35a, 35b, 36 ; 64, 65a, 65b, 66 ; 85 ; 94a, 94b, 94c), qui s'étendent dans la direction circonférentielle et/ou dans la direction axiale et sont reliées par des perçages (17, 18, 19 ; 37, 38a, 38b, 39 ; 67, 68a, 68b, 69 ; 86) ou analogues à l'environnement ou à un espace de collecte du gaz.

6. Palier aérostatique suivant l'une des revendications précédentes, caractérisé par le fait que les surfaces de guidage (2a, 2b, 4a, 4b ou 22a, 22b, 24a, 24b ; 53a, 53b, 55a, 55b), qui servent au guidage axial, sont situées sur les extrémités du palier ou à l'intérieur de ce dernier.

7. Palier aérostatique suivant la revendication 1, 4 ou 5, caractérisé par le fait que les fentes (83, 84) du palier possèdent en coupe longitudinale une forme en V, de sorte que la coque du palier (82) ou l'arbre (81) possède approximativement la forme de cônes doubles.

8. Palier aérostatique suivant la revendication 5, caractérisé par le fait qu'il est prévu deux, trois ou un plus grand nombre de nervures axiales (94a, 94b, 94c) en tant que trajets supplémentaires de sortie du gaz.

9. Palier aérostatique suivant la revendication 8, caractérisé par le fait que les rainures axiales longitudinales (94a, 94b, 94c) sont réparties sur le pourtour du palier à des distances respectivement différentes entre elles.

10. Palier aérostatique suivant l'une des revendications précédentes, caractérisé par le fait qu'il est constitué par deux ou plusieurs pièces à symétrie de révolution (31a, 31b), qui peuvent être insérées l'une dans l'autre, selon une liaison par formes complémentaires (40), par assemblage à tenon et mortaise ou analogue.

11. Palier aérostatique suivant la revendication 10, caractérisé par le fait que la porosité des surfaces de séparation (40) permet, éventuellement moyennant l'incorporation de cavités (41), une libre circulation du gaz entre les différentes parties (31a, 31b) du palier.

FIG 1

FIG 2

FIG 3

86  84        85    83    82

81

FIG 4

94a
92
91
93
94c
94b

FIG 5